# EUROPEAN PATENT APPLICATION

(11) **EP 3 611 204 A1**
(43) Date of publication of application: **19.02.2020**
(21) Application number: 18188631.8
(22) Date of filing: 13.08.2018
(51) Int. Cl.: C08G 18/76, C08G 18/10, C08G 18/12, C08G 18/32

(54) **PROCESS FOR PREPARING POLYISOCYANATES CONTAINING URETHANE GROUPS**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a process for preparing a polyisocyanate composition containing urethane groups, and to the polyisocyanate compositions containing urethane groups that are obtained or obtainable by this process.

## Description

The present invention relates to a process for preparing a polyisocyanate composition containing urethane groups, and to the polyisocyanate compositions containing urethane groups that are obtained or obtainable by this process.

Urethane group containing Polyisocyanates that are formed from low molecular mass polyhydroxy compounds and, for example, toluene diisocyanate (TDI) have been known for a long time and are described as early as in DE870400 or DE953012. Products of this kind are of great importance in the area of polyurethane paints and coatings, particularly in wood varnishing, and also in the adhesives sector.

Commercial products are nowadays produced by reacting polyhydroxy compounds with 5 to 10 times the amount of toluene diisocyanate, followed by distillative removal of the excess starting diisocyanate, preferably using a thin-film evaporator.

Processes of this kind are described for example in DE4140660, DE1090196 or US3183112.

In US3183112 a description is given of the reaction of diisocyanate and polyhydroxy compound taking place preferably batchwise, with the diisocyanate being initially introduced and the polyhydroxy compound supplied as a small stream. This ensures that there is always a large excess of diisocyanate present, but particularly at the start of the reaction.

On the other hand DE1090196 describes the advantage of performing the reaction of diisocyanate and polyhydroxy compound continuously. Proposed mixing equipment is a mixing nozzle, a mixing chamber or a mechanical mixing apparatus, such as turbomixers or rotary pumps, for example. The examples disclose the use of a mixing nozzle and a mixing pump for the continuous reaction. A stirred tank, however, is disclosed merely as a batch reactor. In each case, the subsequent distillation must take place continuously, since the product is damaged even on periodic distillation in the laboratory glass flask.

DE4140660 likewise describes very generally a process for preparing polyisocyanates containing urethane groups. The examples disclose only batch reactions on the laboratory scale.

WO2014/139873 describes a process for preparing polyisocyanates containing urethane groups and having particularly low colour numbers. The main feature addressed is the quality of the toluene diisocyanate used, and only little information is given on the preparation process itself. While there is a description of the required temperature ranges and equivalent ratios, there is no reference to the technical implementation of the reaction. The examples disclose batch reactions on the laboratory scale.

For the large-scale industrial manufacture of polyisocyanates containing urethane groups, there are a number of factors which are important.

In industrial manufacturing, the highly exothermic reaction of the diisocyanates with the often low molecular mass polyhydroxy compounds poses a challenge for the temperature control of the reaction. Ultimately, this often results in consequences for the quality, for example the colour, the NCO content, the viscosity, and also the shelf life of the products. It is known that cooling via the reactor wall is pushing its limits on the industrial scale in view of the progressively worsening surface-to-volume ratio with increasing scale. Cooling via internal cooling coils or chilled flow baffles leads to dead spaces and inhomogeneities, which again are detrimental to product quality. Cooling of the stirrer itself is also generally attended by problems, since there is a risk of deposits and therefore of a drop in the cooling performance. The processes known to date are therefore not ideally suited to present-day quality requirements. Batch processes, moreover, have economic drawbacks, since there are unproductive times for the emptying, cleaning and charging of the vessels. Another criterion for quality of the production process is the resin yield, since a low resin yield is reflected directly in an increased energy expenditure for the distillation. This resin yield is defined as the mass fraction of the polyisocyanate in the fully reacted product mixture. Monomeric diisocyanate that has remained must be removed by distillation so that physiologically unobjectionable products are obtained. Of course resin yield can be increased simply by raising the conversion of the diisocyanate used, and hence simply by virtue of a higher polyol fraction in the reaction mixture. However, this normally also leads to the formation of adducts of higher molecular mass, meaning that the viscosity of the polyisocyanate is undesirably increased and its NCO content is reduced.

It was an object of the invention, therefore, to provide a process for preparing polyisocyanates containing urethane groups that allows a readily controllable temperature regime even on the industrial scale, with little cost and complexity of apparatus, thus allowing products to be produced that are of consistent quality, with long shelf lives and a low viscosity.

This object has been achieved by means of a process for preparing polyisocyanates containing urethane groups by reacting an excess of diisocyanate with a composition comprising at least one polyhydroxy compound, characterized in that the reaction is operated continuously in a reaction system which consists of at least two residence apparatuses.

Preferably in accordance with the invention the expressions "comprising" or "encompassing" mean "substantially consisting of' and more preferably "consisting of'.

Suitable starting materials for the process of the invention include fundamentally all industrially available diisocyanates, such as, for example, toluene diisocyanate, methylenediphenyl diisocyanate, hexamethylene diisocyanate, pentamethylene diisocyanate, xylylene diisocyanate, naphthalene diisocyanate, phenylene diisocyanate, isophorone diisocyanate, hexahydrotoluene diisocyanate, dodecahydromethylenediphenyl diisocyanate or else mixtures of such diisocyanates. The mixtures may also comprise up to 10% of the higher polycyclic homologues of methylenediphenyl diisocyanate. Particularly suitable, on account of their greater reactivity towards polyhydroxy compounds, are the aromatic diisocyanates toluene diisocyanate and/or methylenediphenyl diisocyanate.

In a first preferred embodiment, 2,4-toluene diisocyanate or a mixture of 2,4-toluene diisocyanate with up to 35 wt% of 2,6-toluene diisocyanate, based on the total weight of the mixture is used as the diisocyanate. Even more preferred is the use of a mixture of 80 wt% 2,4-toluene diisocyanate and 20 wt% 2,6-toluene diisocyanate, based on the total weight of the mixture.

Suitable further starting materials are polyhydroxy compounds, these being compounds which possess a plurality of hydroxyl groups per molecule that are able to react with isocyanate groups. Low molecular mass polyhydroxy compounds are particularly suitable. In a further preferred embodiment, the polyhydroxy compound is selected from the group consisting of di- to tetrahydric alcohols having a molecular weight of 62 to 146 and polyether polyols prepared from them by addition reaction of ethylene oxide and/or propylene oxide and having a molecular weight, calculable from hydroxy group content and hydroxyl functionality, of 106 to 600 g/mol, more preferably of 106 to 470 g/mol. The polyhydroxy compound here may be used in pure form or as any desired mixture of different polyhydroxy compounds.

Suitable di- to tetrahydric alcohols are, for example, ethylene glycol, 1,2-propylene glycol, 1,3-propylene glycol, 1,2-butanediol, 1,3-butanediol, 1,4-butanediol, 1,5-pentanediol, neopentyl glycol, 1,6-hexanediol, 2-ethylhexanediol, glycerol, trimethylolpropane and pentaerythritol.

The polyether polyols can be obtained in a conventional way by alkoxylation of suitable starter molecules or suitable mixtures of starter molecules having a functionality of two to four, with propylene oxide and/or ethylene oxide, optionally in a mixture or in succession in any desired order, being employed for the alkoxylation. Preferred starter molecules used are the alcohols already stated above. Used with particular preference are diols and/or triols.

In one especially preferred embodiment of the process of the invention, trimethylolpropane and/or diethylene glycol is used as the polyhydroxy compound in the composition, more preferably the polyhydroxy compound is a mixture of trimethylolpropane and diethylene glycol. Even more preferably, the composition consists of only trimethylolpropane and / or diethylene glycol.

A suitable reaction system is an arrangement of at least two residence apparatuses, which are connected, preferably connected in series. Connected in series means according to the invention that the discharge from one residence apparatus is passed as a feed into a further residence apparatus. Each of these apparatuses may be replaced in turn by a plurality of apparatuses connected in parallel. In that case preferably not more than 4, more preferably not more than 3 and even more preferably not more than 2 residence apparatuses are connected in parallel. Residence apparatuses employed include, for example, continuous stirred tanks, tubular reactors or columns. Also possible is a combination of different residence apparatuses, in which case it is preferred for the first in the sequence to be configured as a continuous stirred tank reactor.

In a further preferred embodiment, the reaction system comprises or consists of a stirred tank cascade of 2 to 10 stirred tanks, and more preferably it comprises or consists of 3 to 5 stirred tanks, and even more preferably it consists of 3 to 5 stirred tanks. In this case it is possible in turn for individual stirred tanks or two or more of the stirred tanks, preferably the first stirred tank in the sequence, to be replaced by two or more stirred tanks operated in parallel, preferably by two stirred tanks operated in parallel. In particular in the case of large-sized reaction systems, this allows a more effective temperature regime. Also employable in principle are cascades of more than ten stirred tanks, but the cost and complexity of apparatus required for such cascades is generally no longer justified by improved and more consistent product properties.

Alternatively or in addition to the aforementioned preferred embodiment, the reaction system, in a further preferred embodiment, comprises or consists of at least one stirred tank and a tubular reactor connected downstream to this at least one stirred tank.

For the start-up of the continuous reaction it is advantageous to charge the reaction system with the diisocyanate before the reaction is started by introducing continuous feed streams of the diisocyanate and the composition comprising at least one polyhydroxy compound into the reaction system and optionally supplying heat to initiate the reaction. This ensures that there is a sufficient excess of diisocyanate present even at the beginning of the reaction.

In another preferred embodiment, diisocyanate is charged into the reaction system and heated at a temperature of 50 to 120°C, preferably to a temperature of 60 to 110°C and more preferably to a temperature of 70 to 100°C, before the continuous reaction is started by introducing continuous feed streams of the diisocyanate and the composition comprising at least one polyhydroxy compound into the reaction system. This ensures a rapid onset of the reaction and avoids temperature spikes that may affect the selectivity adversely. It is particularly preferred to start the metering of the diisocyanate and of the composition comprising at least one polyhydroxy compound simultaneously or to begin with the diisocyanate followed by the composition comprising at least one polyhydroxy compound.

In a further preferred embodiment of the process of the invention, during the continuous operation, the diisocyanate, before being added to the reaction system, has a temperature ≤ 40°C, preferably ≤ 30°C and more preferably ≤ 22°C. The crystallization temperature of the diisocyanate should be regarded as a lower limit for the temperature. In this way the reaction mixture is cooled by the addition of the diisocyanate and the control of the reaction temperature is improved. With a skilful choice of the operational parameters, it is even possible in this way to operate the reaction without external cooling to remove the heat of reaction. External cooling here refers to the cooling of the reactor via the reactor wall or via a cooling coil projecting into the reaction chamber. The cooling performance of the reactor thus no longer represents any limitation.

In a further preferred embodiment of the process of the invention, the composition comprising at least one polyhydroxy compound, before being added to the reaction system, has a temperature ≤ 65°C, preferably ≤ 50°C. In this way as well it is possible to reduce the demand for external cooling, but the effect is less pronounced than in the case of the diisocyanate, owing to the unfavourable proportions. Moreover, there is a lower limit on the temperature of the composition comprising polyether polyols, imposed by the crystallization temperature.

In a further preferred embodiment of the process of the invention, the diisocyanate and the composition comprising at least one polyhydroxy compound are introduced into the first residence apparatus in an NCO:OH equivalent ratio of between 2.5:1 and 20:1, preferably between 3:1 and 10:1 and more preferably between 3.2:1 and 8:1. The equivalent ratio here is defined as the ratio of the number of NCO groups to the number of OH groups. A ratio within this range on the one hand represents a sufficient excess of diisocyanate, so that essentially each diisocyanate reacts only once with a hydroxyl group and the formation of polyisocyanates of higher molecular mass is suppressed. This is advantageous because in particular the polyisocyanates of higher molecular mass contribute to an increase in the viscosity. On the other hand, excess monomeric diisocyanate has to be removed in the further course of production, and therefore the equivalent ratio should also not to be selected too high.

In a further preferred embodiment of the process of the invention, a first substream of the composition comprising at least one polyhydroxy compound is metered into the first residence apparatus, and a further substream of the composition is metered into at least one further residence apparatus. In this way, the mixing ratio of diisocyanate and composition comprising polyhydroxy compounds becomes favourable for the first substreams, in other words changing to higher diisocyanate excesses. Such a procedure allows the mixing ratio to be altered in the direction of a lower NCO:OH equivalent ratio without adversely affecting the product properties. This results in smaller volume flows for the same production volume, and more economic removal of the monomeric diisocyanate from the desired product.

It is desirable to achieve full conversion of the composition comprising polyhydroxy compounds at the outlet of the last residence apparatus of the reaction system. To achieve this in a reaction system, comprising n residence apparatuses, the composition comprising at least one polyhydroxy compound is metered into the first n-1 residence apparatuses at most so that there is no dosing of polyol into the last residence apparatus. In this case n is an integer ≥ 2, preferably ≥ 2 and ≤ 10.

The reaction mixture emerging from the last residence apparatus contains not only the desired polyisocyanate but also large amounts of unreacted diisocyanate, which is removed by distillation. The distillation takes place continuously, with the polyisocyanate being obtained as the bottom product and the diisocyanate removed being distilled off as a vapour stream. Following condensation, this diisocyanate can be recycled at least partly to the reaction. Where diisocyanates of different reactivities are used simultaneously, it should be borne in mind that in the recycle stream there may be an accumulation of the less reactive diisocyanate. For example, in the preferred embodiment, which uses a mixture of 2,4-toluene diisocyanate and 2,6-toluene diisocyanate as its diisocyanate, it should be borne in mind that in view of the lower reactivity of the 2,6-isomer, the recycled diisocyanate stream contains an increased fraction of 2,6-toluene diisocyanate. When using a mixture of 65 wt% 2,4-toluene diisocyanate and 35 wt% 2,6-toluene diisocyanate as reactant, therefore, the recycle stream will cause the amount of 2,6-toluene diisocyanate to rise above the 35 wt%, based on the sum total of 2,4- and 2,6-toluene diisocyanate. In general this does not pose any problem. If it is unwanted, it is possible to remove a higher fraction of the diisocyanate from the process or else to select a feedstock containing a smaller fraction of 2,6-toluene diisocyanate.

Apparatuses preferred for the distillation are those in which there is only a small temperature difference between heating medium and liquid to be evaporated - in other words, for example, flash, falling-film, thin-film and/or short-path evaporators. The distillation takes place preferably under reduced pressure, this pressure more preferably being between ≥ 1 Pa and ≤ 20 000 Pa, more preferably between ≥ 1 Pa and ≤ 10 000 Pa and very preferably between ≥ 1 Pa and ≤ 500 Pa. The temperature is preferably between ≥ 80°C and ≤ 220°C, more preferably between ≥ 110°C and ≤ 200°C.

In one preferred embodiment, the crude product is distilled in two or more stages. In that case it is particularly advantageous if the pressure is lowered from stage to stage. It is preferred, furthermore, to use more simple evaporators, such as downpipe evaporators, for example, in the first stages and to deploy more complex apparatus in the following stages, such as thin-film evaporators through to short-path evaporators. In this way, polyisocyanates of particularly low monomer content can be produced.

The distilled product from the bottoms discharge can be blended, as and when required, with at least one solvent. Suitable solvents are the commonplace solvents from polyisocyanate chemistry.

A further subject of the present invention is a polyisocyanate containing urethane groups and obtained or obtainable by the process of the invention.

### Examples:

### Example 1 (batch, comparative example):

A jacketed 15 L stirring vessel was charged with 10 kg of toluene diisocyanate (mixture of 80% of the 2,4-isomer and 20% of the 2,6-isomer) and this initial charge was heated to 85°C. Then, with stirring and over the course of 2.5 h, 1.67 kg of a polyol mixture consisting of trimethylolpropane and diethylene glycol in a molar ratio of 3:2 (trimethylolpropane:diethylene glycol) was metered in and the reaction mixture was stirred for a further 30 minutes. Then unreacted toluene diisocyanate was distilled off under vacuum conditions in a thin-film evaporator. The bottom product obtained was a colourless resin (resin yield 64%), which was thereafter diluted with ethyl acetate to a solids content of 75%. This gave a product having a viscosity of 1440 mPas, a residual monomer content of 0.31 wt% and an NCO content of 13.2%.

### Example 2 (stirred tank cascade, inventive):

The reaction system used is a cascade of 4 stirred tanks each with a capacity of 400 L. Before starting the continuous reaction, all 4 stirred tanks were charged with toluene diisocyanate (a mixture of 80% of the 2,4-isomer and 20% of the 2,6-isomer) and these initial charges were heated to 72°C. Then, for preparing the polyisocyanate, continuous streams of toluene diisocyanate and polyol mixture of the same composition as in Example 1 were dosed in a mass ratio of 10:1 into the first reactor of the cascade while the temperature inside the reactor was maintained at 72°C via the jacket. The temperature of the diisocyanate stream was 28°C, the polyol stream was at 60°C. The overall feeding rate was 1.3 m³/h, resulting in an average residence time in the cascade of about 1.2 h.. At these conditions a conversion of > 99.9% was achieved, based on the OH groups of the polyol mixture. Following discharge from the last stirred tank, unreacted toluene diisocyanate was distilled off under vacuum conditions in a thin-film evaporator. The bottom product obtained was a colourless resin (resin yield 41%), which was thereafter diluted with ethyl acetate to a solids content of 75%. The product had a viscosity of 1465 mPas, a residual monomer content of 0.29 wt% and an NCO content of 13.3%.

### Example 3 (tubular reactor, comparative example):

A heated reaction tube (internal diameter 80.8 mm, length 200 m) was used for the reaction of toluene diisocyanate (mixture of 80% of the 2,4-isomer and 20% of the 2,6-isomer) and a polyol mixture of the same composition as in Examples 1 and 2, at 72°C. Different mass ratios were tested, with the overall metering rate being selected in each case such that the residence time of the reaction mixture in the reaction tube corresponded to the residence time from Example 2. Complete conversion of the OH groups was ensured in this way. Independently of the mass ratio, which was varied between 6:1 and 10:1 (toluene diisocyanate:polyol mixture), however, it was not possible to obtain a colourless resin as a bottom product following removal of the unreacted excess of toluene diisocyanate. In every case, a visible, yellowish discoloration occurred. Furthermore, after just 2 days, solid deposits were found in the entry region of the reaction tube.

### Example 4 (stirred tank cascade with polyol split, inventive):

The reaction was performed in analogy to Example 2, with the following modifications being made: the mass ratio between toluene diisocyanate and polyol was lowered to 8.9:1 and the polyol mixture was metered half into the first and half into the second stirred tank in the cascade. The crude product was worked up as in Example 2. The bottom product obtained was a colourless resin (resin yield 46%), which was thereafter diluted with ethyl acetate to a solids content of 75%. The product had a viscosity of 1450 mPas, a residual monomer content of 0.30 wt% and an NCO content of 13.2%.

### Discussion of the examples

While the batch reaction (Example 1) does lead to a high resin yield, deviations in quality occur naturally in the course of production of a plurality of successive batches. For example, increased tendency to crystallization was observed, implying reduced shelf life for certain batches, presumably attributable to the non-steady-state regime. As the reaction progresses, there is a change in the composition in the reactor, and the associated increase in viscosity impairs the removal of heat. Furthermore, by comparison with a continuously operated process, a batch process necessitates larger apparatus and a greater holdup, since the space-time yield is reduced for example as a result of set-up times. For industrial production in particular, batch processes quickly reach their limits, since the surface-to-volume ratio is unfavourable in larger apparatus. Ultimately, the metering rate would have to be reduced in order to control the reaction temperature, thus leading to a further deterioration in the space-time yield. Also this batch reaction process is not as energy efficient as the inventive continuous process. The reason being that all diisocyanate has to be heated to reaction temperature and then the reaction requires high amounts of cooling energy to maintain the temperature despite the exothermic reaction. In contrast, in the inventive processes, only a small portion of the diisocyanate has to be heated in order to initiate the reaction. During continuous operation, the heat of reaction is absorbed by the reactants which are fed at a lower temperature.

A continuous reaction in a tubular reactor is likewise unrewarding, as shown by Example 3. All in all, while the tubular reactor does have a large surface area for the removal of heat, a large part of the heat of reaction is liberated right at the start of the reaction. The deposits observed in the entry region show that within this region there were undesirably high reaction temperatures and hence unwanted secondary reactions going as far as to build up the polymer. In theory, a very high NCO:OH ratio should overcome this issue but at the cost of a low resin yield and consequently high amounts of diisocyanate that have to be removed during distillation.

A single continuously operated stirred tank was not used to carry out the reaction, since in a set-up of that kind, naturally, it is not possible to achieve complete conversion. In order to come as close as possible to this full conversion, the reactor selected would have to be very large, leading in turn to difficulties with mixing and with heat removal. Furthermore, reaction in a single continuously operated stirred tank is known to result in a broad residence time distribution, thus promoting unwanted secondary reactions.

Reaction in a stirred tank cascade, in contrast, is characterized by effective heat removal and constant reaction conditions. Furthermore, this reaction regime enables the metered introduction of precooled starting materials, meaning that the cooling performance of the reactor itself is no longer a limiting factor. The resin yield in such a system is indeed somewhat lower, but this is outweighed by the advantages. The reduced yield can also be counteracted by metering the polyol component not all into the first reactor, but instead distributing it over a number of reactors, as shown by Example 4.

## Claims

1. A process for preparing polyisocyanates containing urethane groups by reacting an excess of diisocyanate with a composition comprising at least one polyhydroxy compound, **characterized in that** the reaction is operated continuously in a reaction system which consists of at least two residence apparatuses.

2. The process according to Claim 1, **characterized in that** the diisocyanate is 2,4-toluene diisocyanate or a mixture of 2,4 tolylene diisocyanate with up to 35 wt% of 2,6-toluene diisocyanate, based on the total weight of the mixture.

3. The process according to Claim 1 or 2, **characterized in that** the polyhydroxy compound is selected from the group consisting of di- to tetrahydric alcohols having a molecular weight of 62 to 146 g/mol and polyether polyols prepared from them by addition reaction of ethylene oxide and/or propylene oxide and having a molecular weight, calculable from hydroxy group content and hydroxyl functionality, of 106 to 600 g/mol.

4. The process according to any of the preceding claims, **characterized in that** the polyhydroxy compound is trimethylolpropane and/or diethylene glycol.

5. The process according to any of the preceding claims, **characterized in that** the composition consists of only trimethylolpropane and / or diethylene glycol.

6. The process according to any of the preceding claims, **characterized in that** the reaction system comprises or consists of a stirred tank cascade having 2 to 10 stirred tanks.

7. The process according to any of the preceding claims, **characterized in that** the reaction system comprises or consists of at least one stirred tank and a tubular reactor connected downstream to this at least one stirred tank.

8. The process according to any of the preceding claims, **characterized in that** the reaction system is charged with diisocyanate and heated at 50 to 120°C, preferably at 60 to 110°C and more preferably at 70 to 100°C, before the continuous reaction started by introducing continuous feed streams of the diisocyanate and the composition comprising at least one polyhydroxy compound into the reaction system.

9. The process according to any of the preceding claims, **characterized in that** during the continuous operation, the diisocyanate, before being added to the reaction system, has a temperature < 40°C, preferably ≤ 30°C and more preferably ≤ 22°C.

10. The process according to any of the preceding claims, **characterized in that** the composition comprising at least one polyhydroxy compound, before being added to the reaction system, has a temperature ≤ 65°C, preferably ≤ 50°C.

11. The process according to any of the preceding claims, **characterized in that** the diisocyanate and the composition comprising at least one polyhydroxy compound are passed into the first residence apparatus in an NCO:OH equivalent ratio of between 2.5:1 and 20:1, preferably between 3:1 and 10:1 and more preferably between 3.2:1 and 8:1.

12. The process according to any of the preceding claims, **characterized in that** a first substream of the composition comprising at least one polyhydroxy compound is metered into the first residence apparatus and a further substream of the composition is metered into at least one further residence apparatus.

13. The process according to any of the preceding claims, **characterized in that** the reaction system consists of n residence apparatuses and the composition comprising at least one polyhydroxy compound is metered only into the first n-1 residence apparatuses.

14. A polyisocyanate containing urethane groups, obtainable or obtained by a process according to any of the preceding claims.
